(19) Europäisches Patentamt / European Patent Office / Office européen des brevets

(11) **EP 4 397 949 A1**

(12) **EUROPEAN PATENT APPLICATION**

(43) Date of publication:
**10.07.2024 Bulletin 2024/28**

(21) Application number: **23172133.3**

(22) Date of filing: **08.05.2023**

(51) International Patent Classification (IPC):
**G01F 22/00** (2006.01)    **G01F 15/063** (2022.01)
**G01F 25/10** (2022.01)    **G01F 15/075** (2006.01)
**H04J 3/06** (2006.01)

(52) Cooperative Patent Classification (CPC):
**G01F 25/10; G01F 15/063; G01F 15/0755;
G01F 22/00; H04J 3/0667**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.01.2023 EP 23150621**

(71) Applicant: **MBV AG
8712 Staefa (CH)**

(72) Inventors:
• **WIGET, Markus
8712 Stäfa (CH)**
• **ARMBRECHT, Lucas
8712 Stäfa (CH)**

(74) Representative: **Schulz Junghans
Patentanwälte PartGmbB
Großbeerenstraße 71
10963 Berlin (DE)**

(54) **AUTOMATED CALIBRATION OF INSTRUMENT TIMER DETECTION**

(57) The present invention relates to a system for calibration of a timer, comprising: a device (1) comprising a timer (10), wherein the device (1) is configured to conduct an analysis using the timer (10), wherein the device (1) is configured to calibrate the timer (10) of the device (1) based on a reference time interval $T_R$ expiring on a timer (20) of an NTP server (2).

Fig. 1

**Description**

The present invention relates to a system and a method for calibration of a timer of a device.

In many cases where devices analyze matter, time duration of the analysis affects the result. This particularly applies to field of particle collection and sampling as well as analysis of particles of all kinds and more. Especially, when using devices for characterization of fluids such as gas or air quality as necessary in food and beverage industries or clean environments such as cleanrooms and manufacturing environments, precise knowledge of a time interval of an analysis is of high importance. Examples for such clean environments are e.g. production lines in the pharmaceutical industries, where air quality must be constantly observed and tested.

Microbial air samplers are a specific type of air monitoring devices that focus on the collection of particles- usually on a microbial growth medium in form of a petri dish filled with agar media or similar or a carrier (e.g., a filter) from which the collected particles may be transferred onto a growth medium. After collection of particles from the gas/air on such a medium plate, the plate is incubated for several hours or even days to let collected living microorganisms grow into visible colonies for subsequent counting and analysis.

There generally exist regulatory limits on how many and which organisms are tolerable in a specific environment and in case limits are exceeded, production lots of pharmaceuticals as one example are typically discarded.

Hence analysis of the air quality with a focus on microbial contamination is a critical quality indicator for product release in multiple large industries. Hence, devices in this field must quantify microbial contamination and gas volume with highest precision. Relying on a subjectively accurate device is usually not sufficient and accuracy has to be proven objectively by comparing every relevant measurement of the device to a reference (a process also referred to as 'calibration' or 'calibrating'). For such calibration to be valid, the validity of the reference has to be proven through an uninterrupted chain of calibrations tracing back to a national calibration standard (traceable calibration) as maintained by (national) metrology institutes.

In the context of quantifying microbial contamination quantifying the sampled mass or volume usually is of particular interest, which corresponds to the mass flow or volumetric flow rate integrated over time.

While (subjectively) highly accurate timers exist (e.g., crystal oscillator based clock in every PC, GPS signal, ...), they either lack (available) traceable calibration or imply the need for additional hardware or both. A calibrated manually operated stopwatch/chronometer may be employed as reference. While fulfilling the requirement of traceable calibration the manual process of starting and stopping the chronometer adds a considerable amount of inaccuracy and dependence on the human operator that performs the calibration.

Based on the above, the problem to be solved by the present invention is to provide a system and a method that allows a traceable calibration of a device timer, particularly involved in sampling a correct mass or volume, wherein it is desirable to accurately determine the time interval over which the analysis is performed (e.g., over which a mass or flow rate of a fluid is to be integrated).

The problem is solved by a system the features of claim 1, and a method having the features of claim 12.

Preferred embodiments of these aspects of the present invention are stated in the corresponding sub claims and are also described below.

According to claim 1, a system for calibration of a timer is disclosed, the system comprising:

- a device comprising a timer, wherein the device is preferably configured to conduct an analysis using the timer (e.g., measuring the duration of an event or activity) and/or to use the timer in a control loop (e.g. controlling the duration of an event or activity),

wherein

the device is configured to calibrate the timer of the device based on a reference time interval $T_R$ expiring on a timer of a reference time server (preferably a Network Time Protocol (NTP) server).

In the context of the present invention calibrating the timer of the device preferably corresponds to comparing a time interval $T_E$ that has expired on the device's timer to a reference time interval $T_R$ expiring on a timer of a reference time server.

According to a preferred embodiment, the device is configured to generate a certificate for documenting a result of the calibration. Particularly, as described further below, the result of the calibration can correspond to or comprise a difference between the time interval $T_E$ and the reference time interval $T_R$.

In a preferred embodiment of the system according to the present invention, the reference time server is an NTP server. While NTP servers are typically used to adjust system time (absolute time) of a computer system (e.g., a personal computer or mobile phone), the present invention is not concerned about absolute time. Instead, the present invention relies on the reference time server / NTP server for an accurate information on time duration to calibrate a timer or clock that is only concerned about time duration (and might not even be aware of absolute time).

Thus, the present invention relies on a reference time server (preferably an NTP server) for providing a calibration reference, wherein preferably a time reference server (particularly an NTP server) operated by a (national) metrology institution is selected, thereby achieving calibration traceable to a (national) calibration standard. Examples of such metrology institutions responsible of national reference time (provided by NTP servers) are the 'Federal Institute of Metrology (METAS)' in Switzerland, the 'Laboratoire National de Métrologie et d'Essais Systèmes de Référence Temps-Espace (LNE-SYRTE)' in France and the 'National Institute of Standards and Technology (NIST)' in the USA.

Employing such a reference time server / NTP server as reference timer, the timer calibration results are traceable in particular, without having to rely on a calibrated manual stopwatch. Advantageously, the calibration process can be completely automated in principle. Furthermore, the latency of traffic with the reference time server (and if applicable the timer under calibration) can be accounted for to further increase accuracy.

In preferred embodiments, the present invention is applied to microbial air samplers. However, the present invention can be used with any device that includes a timer that needs to be calibrated (e.g., air samplers, particle counters, bioanalytical devices etc.).

Particularly, the Network Time Protocol (NTP) is a networking protocol that is used for clock synchronization between computer systems over packet-switched, variable-latency data networks. NTP allows to synchronize computers to within a tolerance of a few milliseconds. NTP can usually maintain time as accurate as tens of milliseconds via the public Internet, and can achieve even better accuracy in local area networks. NTP can be used as a client-server model, but can also be used in peer-to-peer communication, where e.g. both peers consider the other to be a potential time source.

According to a preferred embodiment of the system, the analysis comprises calculating a mass or volume of a fluid using the timer of the device, particularly in case the latter has proven to be accurate within a desired tolerance by the calibration or has been adjusted. According to a further preferred embodiment, using the timer in a control loop corresponds to using the timer of the device to control a time period during which a certain mass or volume of a fluid is passed through the device in case the timer has proven to be accurate within a desired tolerance by the calibration or has been adjusted.

Furthermore, according to a preferred embodiment of the system, the device is a microbial air sampler. Particularly, this device is configured to extract the targeted particles from the air onto or into a suitable growth medium. Particularly, the device is configured to direct a flow of gas/air containing the particles (e.g., microbes or other targeted particles/matter) to a growth medium, so that the particles impact on the growth medium (that can be provided in form of a nutrient plate) for subsequent analysis. However, in other preferred embodiments, the device can be any device, particularly a bioanalytical device, that analyzes matter such as fluids, gases, liquids, particularly with respect to components therein, particularly such as particles and/or microbes.

Furthermore, according to a preferred embodiment of the system, said reference time interval $T_R$ on the time reference server starts at a first time reference server timestamp $T_{NTP,1}$ derived from a time of reception of a first request packet received by the time reference server and/or a time of sending of a first response packet of the time reference server, and ends at a second time reference server timestamp $T_{NTP,2}$ derived from a time of reception of a second request packet received by the time reference server and/or a time of sending of a second response packet of the time reference server.

Particularly, the first time reference server timestamp can correspond to one of: the time of reception of a first request packet received by the time reference server, the time of sending a first response packet of the time reference server, a time derived from said time of reception of the first request packet and said time of sending of the first response packet, particularly an average formed from said time of reception of the first request packet and said time of sending of the first response packet.

Particularly, the second time reference server timestamp can correspond to one of: the time of reception of a first request packet received by the time reference server, the time of sending a first response packet of the time reference server, a time derived from said time of reception of the first request packet and said time of sending of the first response packet, particularly an average formed from said time of reception of the first request packet and said time of sending of the first response packet.

Furthermore, according to a preferred embodiment of the system, the device is configured to send said first request packet P1 to the time reference server and to create a first client timestamp $T_{C,1}$ upon sending the first request packet P1 and to create a second client timestamp $T_{C,2}$ upon receiving a first response packet R1 of the time reference server (containing the timestamps of the time reference server) indicating reception of the first request packet P1 at the time reference server, and wherein the device is configured to send said second request packet P2 to the time reference server and to create a third client timestamp $T_{C,3}$ upon sending the second request packet P2 and to create a fourth client timestamp $T_{C,4}$ upon receiving a second response packet R2 of the time reference server (containing the timestamps of the time reference server) indicating reception of the second request packet P2 at the time reference server.

However, alternatively, just two succeeding client timestamps (e.g. $T_{C,1}$ and $T_{C,3}$, or $T_{C,2}$ and $T_{C,4}$) may be used and the latency of the time reference (e.g. NTP) signal may be considered (i.e. added or subtracted respectively) to the respective client timestamp.

According to yet another alternative preferred embodiment of the system according to the present invention, the latter comprises a master clock (in the embodiment described above, the device is the master itself in particular), wherein the master clock is configured to send a first signal at a start of the calibration to the device, wherein the device is configured to create a first client timestamp $T_{C,1}$ upon receiving the first signal and to send that timestamp $T_{C,1}$ as a first response signal to the master clock indicating reception of the first signal at the device, wherein upon reception of the first response signal at the master clock, the master clock is configured to send a first request packet to the time reference server, and wherein the master clock is configured to receive a first response packet from the time reference server indicating reception of the first request packet by the time reference server, and wherein upon reception of the first response packet the master clock is configured to send a second signal to the device, wherein the device is configured to create a second client timestamp $T_{C,2}$ upon reception of the second signal and to confirm reception of the second signal by sending that second timestamp $T_{C,2}$ as a second response signal to the master clock. Particularly, the first response packet from the time reference server contains the first time reference server time stamp.

Furthermore, the master clock is configured to send a third signal to the device after expiry of a predetermined time span (which particularly corresponds to the nominal time period that will be used for calibration, i.e. comparison of $T_E$ and $T_R$), wherein the device is configured to create a third client timestamp $T_{C,3}$ upon receiving the third signal and to send that third client timestamp $T_{C,3}$ as a third response signal to the master clock indicating reception of the third signal at the device, wherein upon reception of the third response signal at the master clock, the master clock is configured to send a second request packet to the time reference server, and wherein the master clock is configured to receive a second response packet from the time reference server indicating reception of the second request packet by the time reference server, and wherein upon reception of the second response packet the master clock is configured to send a fourth signal to the device, wherein the device is configured to create a fourth client timestamp $T_{C,4}$ upon reception of the fourth signal and to confirm reception of the fourth signal by sending by sending that fourth timestamp $T_{C,4}$ a fourth response signal to the master clock. Particularly, the second response packet from the time reference server contains the second time reference server time stamp.

According to an alternative embodiment, the first, second, third, and fourth response signals need not contain the client timestamps $T_{C,1}, ..., T_{C,4}$. The latter can be sent by the device to the master clock at any time prior to a processing of the client time stamps (e.g., calculation of $T_E$ as described below) by the master clock.

Particularly, note that the client timestamps $T_{C,1}, ..., T_{C,4}$ do not need to relate to absolute time or system time.

Furthermore, according to a preferred embodiment of the system according to the present invention, the device or system is configured to calculate a time interval $T_E$ that has expired on the device's timer using at least said client timestamps $T_{C,1,...,} T_{C,4}$, wherein particularly the device is configured to calculate said time interval $T_E$ as $T_E = [(T_{C,3} - T_{C,1}) + (T_{C,4} - T_{C,2})]/2$, and to compare said time interval $T_E$ to the reference time interval $T_R$, which in particularly is calculated according to $T_R = T_{NTP,2} - T_{NTP,1}$, wherein the system is configured to one of: use a difference between the time interval $T_E$ and the reference time interval $T_R$ to adjust the timer; use a difference between the time interval $T_E$ and the reference time interval $T_R$ in a succeeding calculation/analysis; not use the timer in case an absolute difference between the time interval $T_E$ and the reference time interval $T_R$ exceeds a pre-defined threshold.

As already indicated above, according to a preferred embodiment of the system, the time reference server is a remote time reference server of a national metrology institute (see also above), particularly a remote NTP server of a national metrology institute.

Preferably, in a preferred embodiment of the system, the device is configurable by a user, so as to allow the user to select the time reference server out of a number of available time reference servers.

According to yet another aspect of the present invention, a method for calibration of a timer of a device is disclosed, particularly using a system according to the present invention, wherein the method comprises the steps of:

    a) calibrating the timer of the device based on a reference time interval $T_R$ expiring on a timer of a time reference server, and

    b) not using the timer or adjusting the timer in case based on said calibration the timer is considered not to be accurate within a desired tolerance.

Particularly, discarding the timer can further comprise replacing the timer by a calibrated/accurate timer.

According to a further embodiment of the method the method further comprises the steps of conducting an analysis using the timer in case the timer is accurate within the desired tolerance or has been adjusted, wherein particularly the analysis comprises calculating a mass or a volume by integrating a mass flow rate or volume flow rate of a fluid using the timer.

According to an embodiment, the analysis comprises calculating a flow rate of a fluid, particularly a mass flow rate or a volume flow rate of a fluid, using the time interval $T_E$ (see also above).

According to a preferred embodiment of the method, said reference time interval $T_R$ on the time reference server in step a) starts at a first time reference server timestamp $T_{NTP,1}$ derived from a time of reception of a first request packet received by the time reference server and/or a time of sending of a first response packet of the time reference server, and ends at a second time reference server timestamp $T_{NTP,2}$ derived from a time of reception of a second request packet received by the time reference server and/or a time of sending of a second response packet of the time reference server.

Particularly, as described above the first time reference server timestamp can correspond to one of: the time of reception of a first request packet received by the time reference server, the time of sending a first response packet of the time reference server, a time derived from said time of reception of the first request packet and said time of sending of the first response packet, particularly an average formed from said time of reception of the first request packet and said time of sending of the first response packet.

Furthermore, particularly, the second time reference server timestamp can correspond to one of: the time of reception of a first request packet received by the time reference server, the time of sending a first response packet of the time reference server, a time derived from said time of reception of the first request packet and said time of sending of the first response packet, particularly an average formed from said time of reception of the first request packet and said time of sending of the first response packet (see also above).

According to a preferred embodiment of the method, step a) further comprises sending said first request packet P1 by the device to the time reference server and creating a first client timestamp $T_{C,1}$ by the device upon sending the first request packet P1 and creating a second client timestamp $T_{C,2}$ by the device upon receiving a first response packet R1 of the time reference server indicating reception of the first request packet P1 at the time reference server, and wherein step a) further comprises sending said second request packet P2 by the device to the time reference server and creating a third client timestamp $T_{C,3}$ by the device upon sending the second request packet P2 and creating a fourth client timestamp $T_{C,4}$ by the device upon receiving a second response packet R2 of the time reference server indicating reception of the second request packet R2 at the time reference server.

Alternatively, according to another preferred embodiment of the present invention using a master clock communicating with the time reference server, step a) further comprises

- sending a first signal indicative of a start of the calibration to the device by a master clock, creating a first client timestamp $T_{C,1}$ by the device upon receiving the first signal and sending a first response signal by the device to the master clock indicating reception of the first signal at the device, wherein the first response signal comprises the first client timestamp $T_{C,1}$, and sending a first request packet P1 by the master clock to the time reference server upon reception of the first response signal at the master clock, and receiving a first response packet R1 at the master clock from the time reference server indicating reception of the first request packet P1 at the time reference server, and sending a second signal to the device by the master clock upon reception of the first response packet R1, and creating a second client timestamp $T_{C,2}$ by the device upon reception of the second signal, and confirming reception of the second signal by the device by sending a second response signal by the device to the master clock, wherein the second response signal comprises the second client timestamp $T_{C,2}$, and

- sending a third signal indicative of an end of the time interval $T_E$ to the device by the master clock, creating a third client timestamp $T_{C,3}$ by the device upon receiving the third signal and sending a third response signal by the device to the master clock indicating reception of the third signal at the device, and sending a second request packet P2 by the master clock to the time reference server upon reception of the third response signal at the master clock, and receiving a second response packet R2 at the master clock from the time reference server indicating reception of the second request packet P2 at the time reference server, and sending a fourth signal to the device by the master clock upon reception of the second response packet R2, and creating a fourth client timestamp $T_{C,4}$ by the device upon reception of the fourth signal, and confirming reception of the fourth signal by the device by sending a fourth response signal to the master clock, wherein the fourth response signal comprises the fourth client timestamp ($T_{C,4}$).

Particularly, the first response packet from the time reference server contains the first time reference server time stamp. Furthermore, particularly, the second response packet from the time reference server contains the second time reference server time stamp.

As described above, in a preferred embodiment of the method according to the present invention, a time interval $T_E$ that has expired on the timer of the device is automatically calculated by the device using at least said client timestamps ($T_{C,1}$, ..., $T_{C,4}$), wherein particularly the time interval $T_E$ is automatically calculated as $T_E = [(T_{C,3} - T_{C,1}) + (T_{C,4} - T_{C,2})]/2$ by the device, and wherein the time interval $T_E$ is automatically compared to the reference time interval $T_R$, which in particularly is automatically calculated as $T_R = T_{NTP,2} - T_{NTP,1}$, wherein in case the time interval $T_E$ differs from the reference time interval $T_R$ by more than a predetermined amount, the timer is considered not to be accurate within the desired tolerance, and the timer of the device is either discarded (e.g. not used or displaced) or is adjusted.

According to a preferred embodiment of the method according to the present invention, the time reference server is an NTP server (see also above). Furthermore, according to a preferred embodiment of the method according to the present invention, the time reference server is a remote time reference server of a national metrology institute, particularly a remote NTP server of a national metrology institute.

Furthermore, according to a preferred embodiment of the method, the time reference server is selected by a user out of a plurality of available time reference servers.

In the following, embodiments of the present invention as well further features and advantages and other aspects of the present invention shall be described with reference to the Figures, wherein

Fig. 1 shows an embodiment of system and method according to the present invention, wherein here the device comprising the timer to be calibrated communicates with a time reference server (preferably an NTP server), and

Fig. 2 shows an alternative embodiment, wherein here the device is calibrated by a master clock that communicates with the time reference server (preferably an NTP server)

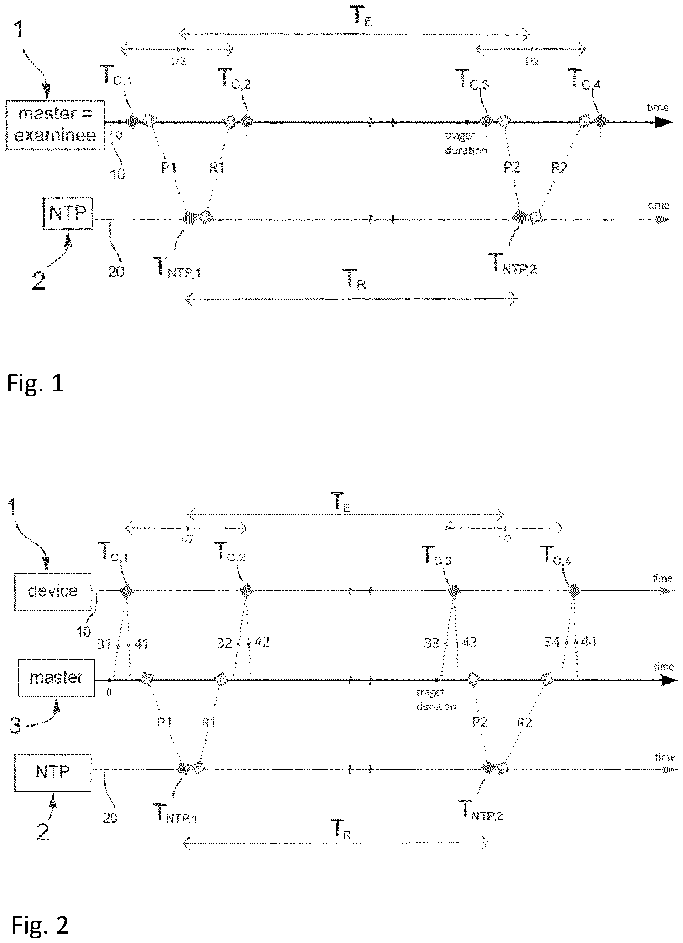

Figs. 1 and 2 show two embodiments of a system and method according to the present invention, wherein a device 1 comprises a timer 10 that shall be calibrated.

Preferably, calibrating the timer 10 to an NTP (Network time Protocol) server is performed, which server is preferably operated by a (national) metrology institute, thereby providing traceability. While NTP is traditionally intended and used to synchronize absolute time (RTC - Real Time Clock) of a local computer or instrument, the present invention proposes to use the NTP here to calibrate the timer 10 of a local device 1 to the difference/expiration of a reference time interval $T_R$ of the NTP server 2 (i.e., the absolute, current time is irrelevant). Instead of an NTP server also another time reference server can be used.

Advantageously, such a calibration process can be automated, wherein the used NTP server 2 is preferably configurable by the user, thereby selecting the reference used, e.g. (national) metrology institute of choice (obtaining traceability) or even an NTP server within the company network (if traceability is not of importance or no internet access is available).

In each of the depicted embodiments, there is timer 10 of a device 1 that needs to be calibrated and an NTP server 2 that serves as the reference.

In preferred embodiment, the master that controls the process corresponds to the device 1 itself. Fig. 1 shows a preferred calibration sequence.

Particularly, as can be seen from Fig. 1, the following relations are used:

The reference time interval $T_R$ amounts to: $T_R = T_{NTP,2} - T_{NTP,1}$.

The time interval $T_E$ lapsing on the device 1 is obtained according to:

$$T_E = [(T_{C,3} - T_{C,1}) + (T_{C,4} - T_{C,2})]/2,$$

wherein $T_{C,1}$ to $T_{C,4}$ denote the first to fourth client timestamps.

The deviation in time between the two intervals corresponds to the difference: $T_E - T_R$ and can be used to calibrate the device. Furthermore, the difference can be used to adjust the timer and/or to adjust succeeding calculations performed by the system/device 1.

The above basic implementations make some assumptions that contribute to an uncertainty of the method, namely the difference in latency to/from the NTP server and an internal NTP delay are neglected.

Particularly, calibration is achieved as follows. As shown in Fig. 1, the reference time interval $T_R$ on the NTP server 2 starts at the first NTP server timestamp $T_{NTP,1}$ derived from a time of reception of a first request packet P1 received by the NTP server 2 and/or a time of sending of a first response packet R1 of the NTP server 2, and ends at the second NTP server timestamp $T_{NTP,2}$ derived from a time of reception of a second request packet P2 received by the NTP server 2 and/or a time of sending of a second response packet R2 of the NTP server 2.

Furthermore, the device 1 is configured to send said first request packet P1 to the NTP server 2 and to create the first client timestamp $T_{C,1}$ upon sending the first request packet P1 and to create the second client timestamp $T_{C,2}$ upon receiving a first response packet R1 of the NTP server 2. Further, the device 1 is configured to send, after expiry of a predefined time span, said second request packet P2 to the NTP server 2 and to create the third client timestamp $T_{C,3}$ upon sending the second request packet P2 and to create the fourth client timestamp $T_{C,4}$ upon receiving a second response packet R2 of the NTP server 2. Particularly, the respective response packet from the NTP server contains the respective (first or second) NTP server time stamp.

In another preferred implementation, the timer 10 that needs to be calibrated is separate from a master clock controlling the process. Fig. 2 shows a preferred calibration sequence in such a setting.

Also, here, assumptions are made that contribute to an uncertainty of the method. Particularly, a difference in latency to/from the NTP is neglected, NTP internal delay is neglected, and a difference in latency to/from the examinee is neglected Note however, that in the example of Fig. 2 the timer of the master clock 3 may lead to an inaccurate target duration (time interval $T_E$), but this is not contributing to inaccuracy of the calibration result.

Particularly, in case a master clock 3 is used, the calibration is achieved as follows (cf. Fig. 2). The master clock 3 is configured to send a first signal 31 to the device 1, wherein the device 1 is configured to create the first client timestamp $T_{C,1}$ upon receiving the first signal 31 and to send a first response signal 41 comprising the first client timestamp $T_{C,1}$ to the master clock 3 indicating reception of the first signal 31 at the device 1, wherein upon reception of the first response signal 41 at the master clock 3, the master clock 3 is configured to send the first request packet P1 to the NTP server 2. Further, the master clock 3 is configured to receive the first response packet R1 from the NTP server 2 indicating reception of the first request packet P1 by the NTP server 2, and wherein upon reception of the first response packet R1, the master clock 3 is configured to send a second signal 32 to the device 1, wherein the device 1 is configured to create the second client timestamp $T_{C,2}$ upon reception of the second signal 32 and to confirm reception of the second signal 32 by sending a second response signal 42 comprising the second client timestamp $T_{C,2}$ to the master clock 3.

Furthermore, the master clock 3 is configured to send a third signal 33 to the device 1 after expiry of a pre-defined time span, wherein the device 1 is configured to create the third client timestamp $T_{C,3}$ upon receiving the third signal 33 and to send a third response signal 43 comprising the third client timestamp $T_{C,3}$ to the master clock 3 indicating reception of the third signal 33 at the device 1, wherein upon reception of the third response signal 43 at the master clock 3, the master clock 3 is configured to send the second request packet P2 to the NTP server 2. Further, the master clock 3 is configured to receive the second response packet R2 from the NTP server 2 indicating reception of the second request packet P2 by the NTP server 2, and wherein upon reception of the second response packet R2 the master clock 3 is configured to send a fourth signal 34 to the device 1, wherein the device 1 is configured to create the fourth client timestamp $T_{C,4}$ upon reception of the fourth signal 34 and to confirm reception of the fourth signal 34 by sending a fourth response signal 44 comprising the fourth client timestamp $T_{C,4}$ to the master clock 3.

Also here, as described above, the device 1 is configured to calculate a time interval $T_E$ that has expired on the device's timer 10 using at least said client timestamps $T_{C,1,...}, T_{C,4}$, wherein particularly the device is configured to calculate said time interval $T_E$ as $T_E = [(T_{C,3} - T_{C,1}) + (T_{C,4} - T_{C,2})]/2$, and to compare said time interval $T_E$ to the reference time interval $T_R$, which in particularly is calculated according to $T_R = T_{NTP,2} - T_{NTP,1}$. In the two embodiments described above, wherein the system or device is particularly configured to one of: use the difference between the time interval $T_E$ and the reference time interval $T_R$ to adjust the timer 10; use the difference between the time interval $T_E$ and the reference time interval $T_R$ in a succeeding calculation/analysis; not use the timer 10 in case an absolute difference between the time interval $T_E$ and the reference time interval $T_R$ exceeds a pre-defined threshold.

The above-described implementations use simple but efficient algorithms and accept the corresponding uncertainties. The accuracy of the calibration can be improved by including methods generally recommended and applied in adjusting/calibrating Real Time Clocks of e.g. a personal computer to an NTP server. For example, instead of performing single calls to the NTP and device, there could be repeated calls and the one/pair with the shortest latencies may be used for calibration. Based on the assumption that shorter latencies correlate to smaller difference between latencies of send and receive, this will lead to better accuracy.

**Claims**

1. A system for calibration of a timer, comprising:

   - a device (1) comprising a timer (10), wherein the device (1) is configured to conduct an analysis using the timer (10) and/or to use the timer (10) in a control loop,

   wherein
   the system is configured to calibrate the timer (10) of the device (1) based on a reference time interval $T_R$ expiring on a timer (20) of a time reference server (2).

2. The system according to claim 1, wherein the time reference server (2) is an NTP server (2).

3. The system according to claim 1 or 2, wherein the device (1) is configured to generate a certificate for documenting a result of the calibration.

4. The system according to one of the preceding claims, wherein the analysis comprises calculating a mass or a volume by integrating a mass flow rate or a volume flow rate of a fluid using the timer (10) of the device (1), and/or wherein using the timer (10) in a control loop corresponds to using the timer (10) of the device (1) to control a time period during which a certain mass or volume of a fluid is passed through the device (1).

5. The system according to one of the preceding claims, wherein the device (1) is one of: a bioanalytical device, a device for collecting particles, a microbial air sampler.

6. The system according to one of the preceding claims, wherein said reference time interval $T_R$ on the time reference server (2) starts at a first time reference server timestamp ($T_{NTP,1}$) derived from a time of reception of a first request packet (P1) received by the time reference server (2) and/or a time of sending of a first response packet (R1) of the time reference server (2), and ends at a second time reference server timestamp ($T_{NTP,2}$) derived from a time of reception of a second request packet (P2) received by the time reference server (2) and/or a time of sending of a second response packet (R2) of the time reference server (2).

7. The system according to claim 6, wherein the device (1) is configured to send said first request packet (P1) to the time reference server (2) and to create a first client timestamp ($T_{C,1}$) upon sending the first request packet (P1) and to create a second client timestamp ($T_{C,2}$) upon receiving a first response packet (R1) of the time reference server (2), and wherein the device (1) is configured to send, after expiry of a predefined time span, said second request packet (P2) to the time reference server (2) and to create a third client timestamp ($T_{C,3}$) upon sending the second request packet (P2) and to create a fourth client timestamp ($T_{C,4}$) upon receiving a second response packet (R2) of the time reference server (2).

8. The system according to claim 6, wherein the system comprises a master clock (3), wherein

   - the master clock (3) is configured to send a first signal (31) to the device (1), wherein the device (1) is configured to create a first client timestamp ($T_{C,1}$) upon receiving the first signal (31) and to send a first response signal (41) comprising the first client timestamp ($T_{C,1}$) to the master clock (3) indicating reception of the first signal (31) at the device (1), wherein upon reception of the first response signal (41) at the master clock (3), the master clock (3) is configured to send the first request packet (P1) to the time reference server (2), and wherein the master clock (3) is configured to receive the first response packet (R1) from the time reference server (2) indicating reception of the first request packet (P1) by the time reference server (2), and wherein upon reception of the first response packet (R1) the master clock (3) is configured to send a second signal (32) to the device (1), wherein the device (1) is configured to create a second client timestamp ($T_{C,2}$) upon reception of the second signal (32) and to confirm reception of the second signal (32) by sending a second response signal (42) comprising the second client timestamp ($T_{C,2}$) to the master clock (3), and wherein
   - the master clock (3) is configured to send a third signal (33) to the device (1) after expiry of a pre-defined time span, wherein the device (1) is configured to create a third client timestamp ($T_{C,3}$) upon receiving the third signal (33) and to send a third response signal (43) comprising the third client timestamp ($T_{C,3}$) to the master clock (3) indicating reception of the third signal (33) at the device (1), wherein upon reception of the third response signal (43) at the master clock, the master clock (3) is configured to send the second request packet (P2) to the time reference server (2), and wherein the master clock (3) is configured to receive the second response packet (R2) from the time reference server (2) indicating reception of the second request packet (P2) by the time reference server (2), and wherein upon reception of the second response packet (R2) the master clock (3) is configured to send a fourth signal (34) to the device (1), wherein the device (1) is configured to create a fourth client timestamp ($T_{C,4}$) upon reception of the fourth signal (34) and to confirm reception of the fourth signal (34) by sending a fourth response signal (44) comprising the fourth client timestamp ($T_{C,4}$) to the master clock (3).

9. The system according to claim 7 or 8, wherein the device (1) is configured to calculate a time interval $T_E$ that has expired on the device's timer (10) using at least said client timestamps ($T_{C,1,..}$, $T_{C,4}$), wherein particularly the device is configured to calculate said time interval $T_E$ as $T_E = [(T_{C,3} - T_{C,1}) + (T_{C,4} - T_{C,2})] / 2$, and to compare said time interval $T_E$ to the reference time interval $T_R$, which in particularly is calculated according to $T_R = T_{NTP,2} - T_{NTP,1}$, wherein the system is configured to one of: use a difference between the time interval $T_E$ and the reference time interval $T_R$ to adjust the timer (10); use a difference between the time interval $T_E$ and the reference time interval $T_R$ in a succeeding calculation; not use the timer (10) in case an absolute difference between the time interval $T_E$ and the reference time interval $T_R$ exceeds a pre-defined threshold.

10. The system according to one of the preceding claims, wherein the time reference server (2) is a time reference server of a national metrology institute, and/or wherein
   the device is (1) configurable by a user, so as to allow the user to select the time reference server (2) out of a plurality of available time reference servers.

11. A method for calibration of a timer (10) of a device (1), particularly using a device (1) according to one of the preceding claims, the method comprising the steps of:

   a) calibrating the timer (10) of the device (1) based on a reference time interval ($T_R$) expiring on a timer (20) of a time reference server (2), and
   b) not using the timer (10) or adjusting the timer (10) in case the timer is not accurate within a desired tolerance.

12. The method according to claim 11, wherein the method further comprises the steps of conducting an analysis using the timer (10) in case the timer (10) is accurate within the desired tolerance, wherein particularly the analysis comprises calculating a mass or a volume by integrating a mass flow rate or volume flow rate of a fluid using the timer (10), and/or wherein said reference time interval ($T_R$) on the time reference server (2) in step a) starts at a first time reference server timestamp ($T_{NTP,1}$) derived from a time of reception of a first request packet (P1) received by the time reference server (2) and/or a time of sending of a first response packet (R1) of the time reference server (2), and ends at a second time reference server timestamp ($T_{NTP,2}$) derived from a time of reception of a second request packet (P2) received by the time reference server (2) and/or a time of sending of a second response packet (R2) of the time reference server (2).

13. The method according to claim 12, wherein step a) further comprises sending said first request packet (P1) by the device (1) to the time reference server (2) and creating a first client timestamp ($T_{C,1}$) by the device (1) upon sending the first request packet (P1) and creating a second client timestamp ($T_{C,2}$) by the device (1) upon receiving a first response packet (R1) of the time reference server (2) indicating reception of the first request packet (P1) at the time reference server (2), and wherein step a) further comprises sending said second request packet (P2) by the device (1) to the time reference server (2) and creating a third client timestamp ($T_{C,3}$) by the device (1) upon sending the second request packet (P2) and creating a fourth client timestamp ($T_{C,4}$) by the device (1) upon receiving a second response packet (R2) of the time reference server (2) indicating reception of the second request packet (R2) at the time reference server (2).

14. The method according to claim 12, wherein step a) further comprises

- sending a first signal (31) to the device (1) by a master clock (3), creating a first client timestamp ($T_{C,1}$) by the device (1) upon receiving the first signal (31) and sending a first response signal (41) by the device (1) to the master clock (3) indicating reception of the first signal (31) at the device (1), wherein the first response signal (41) comprises the first client timestamp ($T_{C,1}$), and sending a first request packet (P1) by the master clock (3) to the time reference server (2) upon reception of the first response signal (41) at the master clock (3), and receiving a first response packet (R1) at the master clock (3) from the time reference server (2) indicating reception of the first request packet (P1) at the time reference server (2), and sending a second signal (32) to the device (1) by the master clock (3) upon reception of the first response packet (R1), and creating a second client timestamp ($T_{C,2}$) by the device (1) upon reception of the second signal (32), and confirming reception of the second signal (32) by the device (1) by sending a second response signal (42) by the device (1) to the master clock (3), wherein the second response signal (42) comprises the second client timestamp ($T_{C,2}$), and

- sending a third signal (33) after expiry of a predefined time span to the device (1) by the master clock (3), creating a third client timestamp ($T_{C,3}$) by the device (1) upon receiving the third signal (33) and sending a third response signal (43) by the device (1) to the master clock (3) indicating reception of the third signal (33) at the device (1), wherein the third response signal (43) comprises the third client timestamp ($T_{C,3}$), and sending a second request packet (P2) by the master clock (3) to the time reference server (2) upon reception of the third response signal (43) at the master clock (3), and receiving a second response packet (R2) at the master clock (3) from the time reference server (2) indicating reception of the second request packet (P2) at the time reference server (2), and sending a fourth signal (34) to the device (1) by the master clock (3) upon reception of the second response packet (R2), and creating a fourth client timestamp ($T_{C,4}$) by the device (1) upon reception of the fourth signal (34), and confirming reception of the fourth signal (34) by the device (1) by sending a fourth response signal (44) to the master clock (3), wherein the fourth response signal (44) comprises the fourth client timestamp ($T_{C,4}$).

15. The method according to claim 12, wherein a time interval $T_E$ that has expired on the timer (10) of the device (1) is automatically calculated by the device using at least said client timestamps ($T_{C,1,...,}$ $T_{C,4}$), wherein particularly the time interval $T_E$ is calculated as $T_E = [(T_{C,3} - T_{C,1}) + (T_{C,4} - T_{C,2})]/2$ by the device (1), and wherein the time interval $T_E$ is automatically compared to the reference time interval $T_R$, which in particularly is automatically calculated according to $T_R = T_{NTP,2} - T_{NTP,1}$, wherein in case the time interval $T_E$ differs from the reference time interval $T_R$ by more than a predetermined amount, the timer (10) is considered not to be accurate within a desired tolerance.

Fig. 1

Fig. 2

Europäisches
Patentamt

European
Patent Office

Office européen
des brevets

# EUROPEAN SEARCH REPORT

**Application Number**

EP 23 17 2133

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2017 181193 A (OSAKA GAS CO LTD; OKI ELECTRIC IND CO LTD) 5 October 2017 (2017-10-05) | 1-5, 10-12 | INV. G01F22/00 G01F15/063 G01F25/10 G01F15/075 H04J3/06 |
| A | * paragraphs [0030], [0050], [0051], [0057]; figures 1,2 * | 8,14 | |
| | ----- | | |
| X | JP 2011 208957 A (METAWATER CO LTD) 20 October 2011 (2011-10-20) | 1-5,11, 12 | |
| A | * paragraphs [0031], [0032], [0033], [0028]; figures 1,4 * | 8,14 | |
| | ----- | | |
| X | EP 3 010 168 A1 (SERCOMM CORP [TW]) 20 April 2016 (2016-04-20) | 1-3,6,7, 9,11-13, 15 | |
| A | * paragraphs [0017] - [0020], [0009], [0022], [0024], [0027]; claim 1; figures 2,3,4 * | 8,14 | |
| | ----- | | |
| X | US 2008/049743 A1 (ZAMPETTI GEORGE P [US]) 28 February 2008 (2008-02-28) | 1-3,10, 11 | |
| A | * paragraphs [0006], [0021]; figures 1,2 * | 8,14 | TECHNICAL FIELDS SEARCHED (IPC) |
| | ----- | | G01F H04J H04L G04G G04R |

The present search report has been drawn up for all claims

| Place of search | Date of completion of the search | Examiner |
|---|---|---|
| The Hague | 11 October 2023 | Reeb, Bertrand |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 2133

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2023

| Patent document cited in search report | | Publication date | Patent family member(s) | | Publication date |
|---|---|---|---|---|---|
| JP 2017181193 | A | 05-10-2017 | JP | 6664254 B2 | 13-03-2020 |
| | | | JP | 2017181193 A | 05-10-2017 |
| JP 2011208957 | A | 20-10-2011 | JP | 5633959 B2 | 03-12-2014 |
| | | | JP | 2011208957 A | 20-10-2011 |
| EP 3010168 | A1 | 20-04-2016 | CN | 104270218 A | 07-01-2015 |
| | | | EP | 3010168 A1 | 20-04-2016 |
| | | | TW | 201616839 A | 01-05-2016 |
| US 2008049743 | A1 | 28-02-2008 | AU | 2007235206 A1 | 18-10-2007 |
| | | | BR | PI0707441 A2 | 03-05-2011 |
| | | | CA | 2653145 A1 | 18-10-2007 |
| | | | CN | 101416431 A | 22-04-2009 |
| | | | EP | 1984837 A2 | 29-10-2008 |
| | | | JP | 2009525710 A | 09-07-2009 |
| | | | KR | 20080107402 A | 10-12-2008 |
| | | | US | 2008049743 A1 | 28-02-2008 |
| | | | WO | 2007117756 A2 | 18-10-2007 |

EPO FORM P0459

For more details about this annex : see Official Journal of the European Patent Office, No. 12/82